# EUROPÄISCHE PATENTSCHRIFT

(11) **EP 3 141 337 B1**
(45) Veröffentlichungstag und Bekanntmachung des Hinweises auf die Patenterteilung: **07.11.2018**
(21) Anmeldenummer: 15184791.0
(22) Anmeldetag: 11.09.2015
(51) Int. Cl.: B23Q 1/62

(54) **VORRICHTUNG ZUM BEARBEITEN VON STANGENFÖRMIGEN WERKSTÜCKEN WIE BEISPIELSWEISE FENSTERPROFILEN ODER TÜRPROFILEN**
DEVICE FOR PROCESSING ROD-SHAPED WORKPIECES, SUCH AS WINDOW OR DOOR PROFILES
DISPOSITIF DE TRAITEMENT DE PIECES USINEES EN FORME DE TIGES PAR EXEMPLE DES PROFILS DE FENETRE OU DE PORTE

(43) Veröffentlichungstag der Anmeldung: 15.03.2017
(73) Patentinhaber: Schirmer Maschinen GmbH, 33415 Verl (DE)
(72) Erfinder: Vogt, Roland, 33415 Verl (DE)
(74) Vertreter: Flötotto, Hubert

(56) Entgegenhaltungen:
- JP-A- H0 724 677
- US-A- 4 589 174
- US-A- 4 858 301

## Beschreibung

### Technisches Umfeld

Die Erfindung betrifft eine Vorrichtung zum Bearbeiten von stangenförmigen Werkstücken wie beispielsweise Fensterprofilen oder Türprofilen, die mittels einer Transporteinrichtung in wenigstens einer horizontalen Ebene bewegbar sind, und wobei in einer im Wesentlichen senkrecht angeordneten Ebene zur Bewegungsrichtung der Werkstücke eine Bearbeitungseinrichtung mit Werkzeugen vorgesehen ist, die in der senkrechten Ebene in Bezug zum Werkstück räumlich ausgerichtet ist.

### Stand der Technik

Bei der Bearbeitung von Profilen, die beispielsweise bei der Herstellung von Türen oder Fenstern verwendet werden, sind zahlreiche unterschiedliche Arbeitsvorgänge durchzuführen. Solche Profile können aus Kunststoff, Metall oder Holz bestehen. Auch eine Kombination verschiedener Materialien ist möglich. Wenn z. B. Kunststoffhohlprofile für Fenster bearbeitet werden, so müssen Entwässerungsschlitze schräg in den Falz und/oder nach unten und/oder nach vorne gefräst werden. Außerdem sind Schließteilpositionsbohrungen an einem Blendrahmenprofil und/oder an einem Kämpferprofil zu setzen. Weiterhin müssen ggf. Schlosskästen ausgefräst werden. Mittelschrauben für Rollläden, Führungsleisten und Wetterschenkel müssen ebenfalls verbaut werden. Ferner sind im Flügellagerüberschlag Eckbandbohrungen vorzusehen. Übliche Durchmesser für Entwässerungs- und Belüftungsschlitze sind hier beispielsweise 5 mm, während die Schließteilbohrungen sowie die Eckwandbohrungen immer einen Durchmesser von 3 mm aufweisen. Um diese unterschiedlichen Bohrungen und Ausfräsungen durchführen zu können, sind verschiedene Bearbeitungswerkzeuge wie Bohrer oder Fräser in unterschiedlichen Größen erforderlich.

Bei einer automatisierten Bearbeitung entfällt die Möglichkeit z. B. bei einem einzigen Bohrer die Bohreransätze auszuwechseln, weil der Aufwand hierfür zu groß wäre. Einfacher ist es von vornherein verschiedene Bohrer mit jeweils unterschiedlichen Einsätzen oder unterschiedliche Bohr- und Fräswerkzeuge vorzusehen. Um diesem Bearbeitungsaufwand gerecht zu werden und hier möglichst eine automatisierte Bearbeitung bereitzustellen ist aus der DE 197 25 043 A1 eine Vorrichtung zum Bearbeiten von Bauelementen bekannt. Die bekannte Vorrichtung verfügt hierbei über eine in einer im Wesentlichen senkrecht angeordneten Ebene zur Bewegungsrichtung der Bauelemente verlaufende Bearbeitungseinrichtung mit ihren Bearbeitungsgeräten, die in Bezug zum Werkstück räumlich ausgerichtet sind. Die Bearbeitungswerkzeuge befinden sich hierbei auf einem Trägerelement, so dass die auf dem Trägerelement vorgesehenen Bearbeitungswerkzeuge entsprechend durch Verfahren des jochartigen Trägerelementes zu dem in der Transportrichtung vorgesehenen Werkstück in Bearbeitung gelangen.

Bei dieser bekannten Ausführung wird es als nachteilig angesehen, dass die an dem Trägerelement vorgesehenen Bearbeitungswerkzeuge, was eine flexible Bearbeitung angeht sowie hinsichtlich der Bearbeitungsgeschwindigkeit noch wesentlich verbesserungswürdig ist.

Eine Vorrichtung nach dem Oberbegriff des beiliegenden Anspruchs 1 ist aus der JP H07 24677 A bekannt.

### Aufgabe

Der Erfindung liegt somit das Problem zugrunde, eine Vorrichtung zum Bearbeiten von stangenförmigen Werkstücken derart weiterzubilden, welche hinsichtlich der Bearbeitung des Werkstückes einerseits eine höhere Prozesssicherheit gewährleistet unter Bereitstellung einer schonenden Oberflächenbehandlung, wobei insbesondere auch die Bearbeitungszeit des Werkstücks wesentlich verkürzt werden soll.

Zudem soll insbesondere der Bearbeitungszugang des Bearbeitungswerkzeugs zu dem Werkstück auf der Transporteinrichtung wesentlich flexibler gehalten werden.

### Lösung

Erfindungsgemäß wird das Problem mit den Merkmalen des Anspruchs 1 gelöst. Vorteilhafte Ausgestaltungen und Weiterbildungen der Erfindung ergeben sich aus den Unteransprüchen.

Die mit der Erfindung erreichten Vorteile bestehen darin, dass mit der erfindungsgemäßen Vorrichtung zum Bearbeiten die Zugangsrichtungen der Bearbeitungswerkzeuge in Bezug zu dem transportiertem Werkstück wesentlich flexibler gestaltbar ist, da insbesondere die Bearbeitungswerkzeuge hier auf einer oder mehrere Teilkreisbahnen gegenüber dem zu transportierendem Werkstück verfahrbar angeordnet sind.

So besteht die Bearbeitungseinrichtung aus in der senkrechten Ebene angeordneten Teilkreissegmenten, an denen die Bearbeitungswerkzeuge vorgesehen sind. Somit besteht die Möglichkeit, dass beispielsweise in einem Winkel zum Werkstück - und hier in unterschiedlichen Winkellagen - das Fräs- oder das Bohrwerkzeug am Werkstück eingreifen kann. In Weiterbildung der Erfindung ist je ein Teilkreissegment seitlich an der Transporteinrichtung vorgesehen. Hierbei ist auf jedem Teilkreissegment wenigstens ein Bearbeitungswerkzeug verfahrbar. Das einzelne Teilkreissegment kann hierbei etwa einen viertel Kreisbogenabschnitt bis zu einem halben Kreisbogenabschnitt einnehmen. In Weiterbildung der Erfindung sind die beiden Teilkreisbogensegmente in der Bearbeitungseinrichtung gegenüberliegend angeordnet. Somit können die Bearbeitungswerkzeuge - hier beispielsweise Bohrer - in bestimmten Winkellagen zueinander an dem Werkstück eingreifen.

Nach einer vorteilhaften Ausgestaltung können auf jedem Teilkreissegment zwei Bearbeitungswerkzeuge verfahrbar angeordnet sein, so dass in der Bearbeitungsvorrichtung vier Werkzeuge auf den entsprechenden Teilkreisen hier entsprechend das Werkstück bearbeiten können, was die Bearbeitungszeit des Werkstücks wesentlich verkürzt.

Gemäß der Erfindung ist jedes Teilkreissegment gegenüber dem auf der Transporteinrichtung angeordnetem Werkstück in der X-, Y-, und Z-Richtung verfahrbar. Die Bearbeitungswerkzeuge werden entlang der Fahrbahn auf dem Teilkreissegment mittels eines Antriebs verfahren. Aufgrund dieser Ausbildung ist es nun möglich, dass in jeder Stellung oder Lage das Werkstück durch das Bearbeitungswerkzeug angefahren werden kann.

In Weiterbildung sind die Bearbeitungswerkzeuge entlang der Bewegungsbahn des Bearbeitungswerkzeuges auf Schlitten befestigt, welche auf an dem Teilkreissegment angeordneten Schienen gelagert sind. Die Transporteinrichtung ist im Bereich der senkrechten Ebene der Bearbeitungseinrichtung unterbrochen ausgebildet. Aufgrund dieser Ausbildung wird nun erreicht, dass der Zugang für die Bearbeitungswerkzeuge, wie beispielsweise für den Fräser oder auch den Bohrer, an jeder Stelle des zu bearbeitenden Werkstücks möglich ist.

Gemäß der Erfindung besteht die Bearbeitungseinrichtung aus je einer Haltevorrichtung für das einzelne Teilkreissegment, die an einer Führung an einem Maschinenrahmen in der X-, Z-Richtung verfahrbar ist, wobei auf der Führung ein senkrecht angeordneter Profilträger vorgesehen ist, an dem das befestigte Teilkreissegment höhenverstellbar gelagert ist.

### Beschreibung der Zeichnungen

Ein Ausführungsbeispiel der Erfindung ist in den Zeichnungen rein schematisch dargestellt und wird nachfolgend näher beschrieben. Es zeigt:
- Figur 1: eine Vorrichtung zum Bearbeiten von stangenförmigen Werkstücken in der perspektivischen Darstellung gemäß der Erfindung;
- Figur 2: eine Detaildarstellung eines seitlich angeordneten Teilkreissegmentes mit der Transporteinrichtung, ebenfalls in der perspektivischen Darstellung;
- Figur 3: eine perspektivische Darstellung der Bewegungsbahn auf der die Werkzeugträger verfahrbar angeordnet sind; und
- Figur 4: eine Seitenansicht der Bewegungsbahn des Teilkreissegmentes mit aufgesetztem Bearbeitungswerkzeug.

### Ausführungsbeispiele

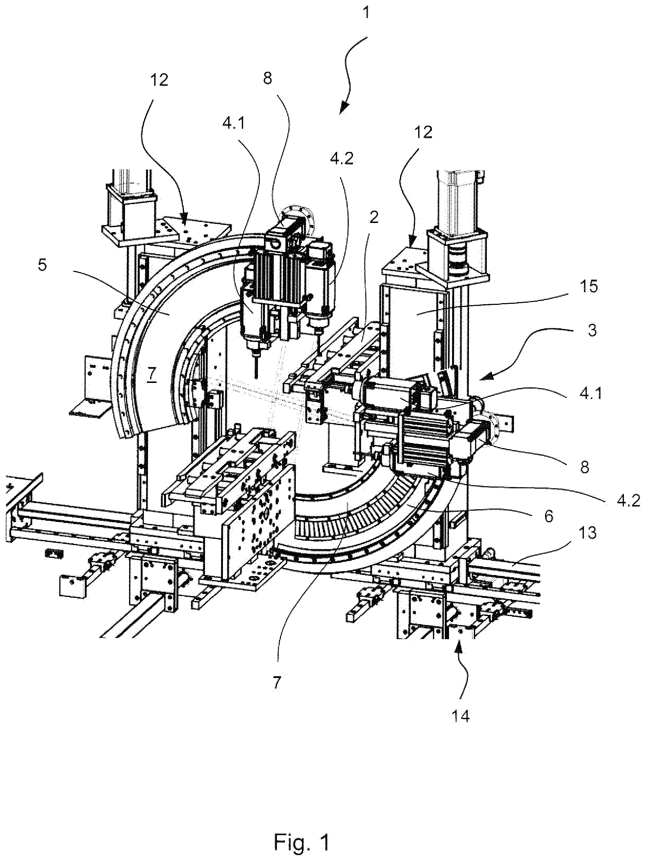

Die Figur 1 zeigt in der perspektivischen Darstellung eine Vorrichtung 1 zum Bearbeiten von stangenförmigen Werkstücken, wie beispielsweise ein Fenster- oder Türprofil, welches hier nicht näher dargestellt ist. Das Fenster- oder Türprofil wird hierbei mittels einer Transporteinrichtung 2 in wenigstens einer horizontalen Ebene bewegt. In einer im Wesentlichen senkrecht dazu angeordneten Ebene der Bewegungsrichtung der Werkstücke ist eine Bearbeitungseinrichtung 3 mit Werkzeugen 4 zur Bearbeitung des Profils vorgesehen. Die Werkzeuge 4 sind in der senkrechten Ebene in Bezug zum Werkstück räumlich ausgerichtet.

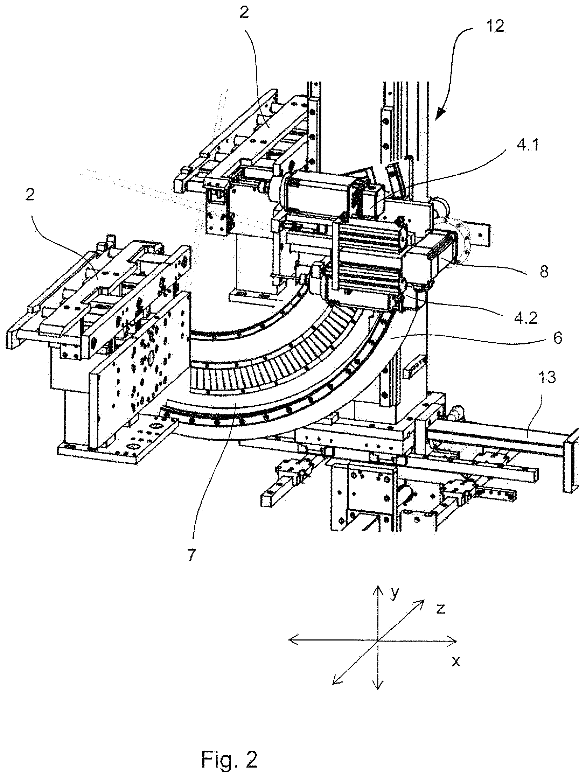

Wie insbesondere aus der Figur 1, aber auch aus der Figur 2 erkennbar ist, besteht die Bearbeitungseinrichtung 3 aus in der senkrechten Ebene angeordneten Teilkreissegmenten 5, 6 an denen die Werkzeuge 4 vorgesehen sind. Dabei ist seitlich an der Transporteinrichtung 2 jeweils ein Teilkreissegment 5 und 6 vorgesehen. Auf jedem Teilkreissegment 5, 6 kann wenigstens ein Bearbeitungswerkzeug 4 verfahrbar angeordnet sein, wobei, wie dargestellt, mehrere Werkzeuge 4 vorgesehen sind. Wie aus der Figur 2 deutlich zu erkennen ist, umfasst das einzelne Teilkreissegment 5, 6 etwa einen ¼-Kreisbogenabschnitt. Wie insbesondere aus der Figur 1 deutlich zu erkennen ist, sind die beiden Teilkreissegmente 5 und 6 in der Bearbeitungseinrichtung 3 gegenüberliegend in einer Ebne angeordnet.

Wie das dargestellte Ausführungsbeispiel zeigt, sind auf jedem Teilkreissegment 5, 6 zumindest zwei Bearbeitungswerkzeuge 4.1 und 4.2 verfahrbar angeordnet. Das Teilkreissegment 5 sowie das Teilkreissegment 6 als solches ist hierbei gegenüber dem auf der Transporteinrichtung 2 angeordnetem Werkstück in der X-,Y-, und der Z-Richtung verfahrbar, wie dies durch das eingezeichnete Koordinatensystem verdeutlicht werden soll.

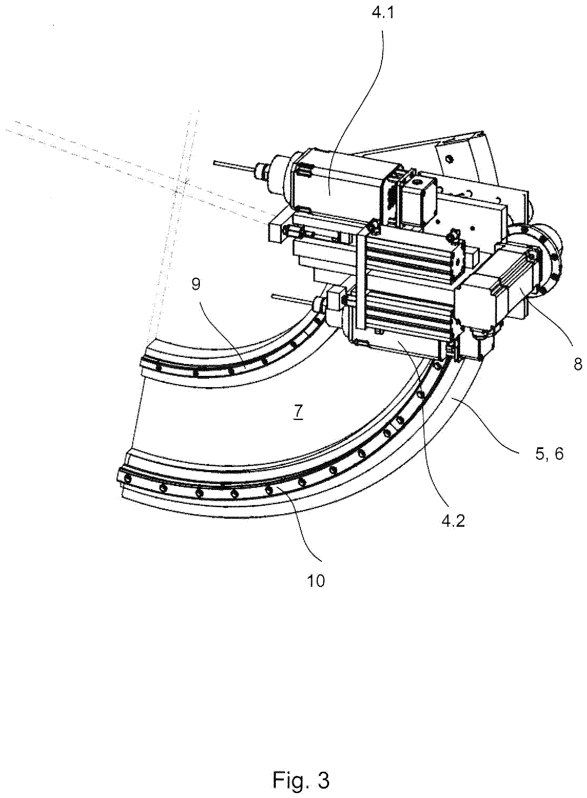

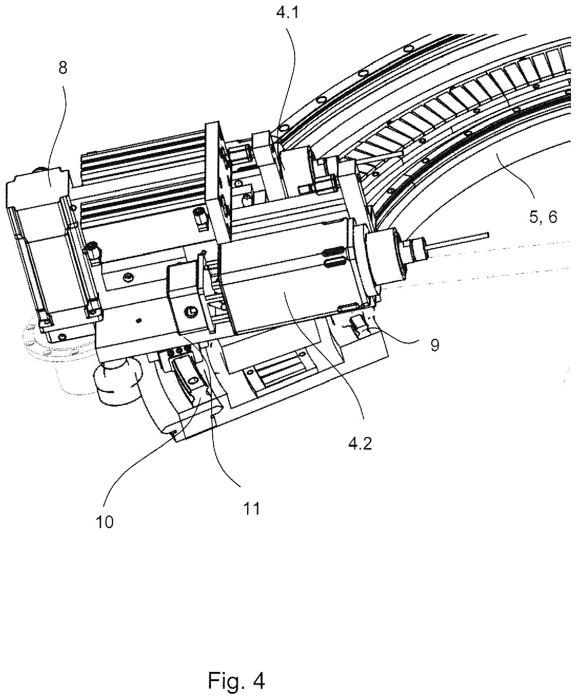

Die Bearbeitungswerkzeuge 4.1 und 4.2 werden entlang der Bewegungsbahn 7 auf dem Teilkreissegment 5, 6 mittels eines Antriebs 8 verfahren. Wie sich der Antrieb 8 im Einzelnen darstellt, ist in der Figur 3 und in der Figur 4 näher zu erkennen, wobei dieser außen am Teilkreissegment 5, 6 angeordnet ist. Seitlich des Teilkreissegmentes sind jeweils Schienen 9 und 10 vorgesehen, die eine Bewegungsbahn 7 bilden, auf der die Bearbeitungswerkzeuge 4 auf Schlitten 11 verfahren werden. Somit versteht es sich, dass die einzelnen Bearbeitungswerkzeuge 4 durch eine Steuerungseinrichtung auf der Bewegungsbahn 7 entsprechend positioniert werden können um somit entsprechende Winkellagen zum Werkstück auf der Transporteinrichtung 2 einzunehmen.

Wie insbesondere aus der Figur 1 und auch 2 zu erkennen ist, ist die Transporteinrichtung 2 in der Ebene, wo die Bearbeitungseinrichtung 3 angeordnet ist, unterbrochen ausgebildet, so dass ein Zugang der Werkzeuge 4 um das eingespannte Profil herum auf der Transporteinrichtung 2 möglicht ist.

Die einzelne Bearbeitungseinrichtung 3 als solches besteht aus jeweils einer Halteeinrichtung 12 für das Teilkreissegment 5, 6, welche an einer Führung 13 in einem Maschinenrahmen 14 in der X- und Z-Richtung verfahrbar ist. Auf der Führung 13 ist ein Profilträger 13 senkrecht angeordnet, an dem das befestigte Teilkreissegment 5, 6 in der Y-Richtung höhenverstellbar gelagert ist, so dass entsprechende Höhenlagen an dem Profilträger 13 eingestellt werden können.

### Bezugszeichenliste

- 1: Vorrichtung
- 2: Transporteinrichtung
- 3: Bearbeitungseinrichtung
- 4: Werkzeug 1, 2
- 5: Teilkreissegment
- 6: Teilkreissegment
- 7: Bewegungsbahn
- 8: Antrieb
- 9: Schiene
- 10: Schiene
- 11: Schlitten
- 12: Haltevorrichtung
- 13: Führung
- 14: Maschinenrahmen
- 15: Profilträger

## Patentansprüche

1. Vorrichtung (1) zum Bearbeiten von stangenförmigen Werkstücken wie beispielsweise Fensterprofilen oder Türprofilen, die mittels einer Transporteinrichtung (2) in wenigstens einer horizontalen Ebene bewegbar sind, und wobei in einer im Wesentlichen senkrecht angeordneten Ebene zur Bewegungsrichtung der Werkstücke eine Bearbeitungseinrichtung (3) mit Werkzeugen (4) vorgesehen ist, die in der senkrechten Ebene in Bezug zum Werkstück räumlich ausrichtet ist, wobei die Bearbeitungseinrichtung (3) aus einem oder mehreren in einer im Wesentlichen senkrechten Ebene angeordneten Teilkreissegmenten (5, 6) besteht, an denen die Werkzeuge (4) verfahrbar angeordnet sind, **dadurch gekennzeichnet, dass** jedes Teilkreissegment (5, 6) gegenüber dem auf der Transporteinrichtung (2) angeordneten Werkstück in der X-, Y-, und Z-Richtung verfahrbar ist und die Bearbeitungseinrichtung (3) aus je einer Haltevorrichtung (12) für das Teilkreissegment (5, 6) besteht, welche an einer Führung (13) in einem Maschinenrahmen (14) in der X-und Z-Richtung verfahrbar ist, wobei auf der Führung (13) ein senkrecht angeordneter Profilträger (15) vorgesehen ist, an dem das befestigte Teilkreissegment (5, 6) in der Y-Richtung verschiebbar gelagert ist.

2. Vorrichtung nach Anspruch 1,
**dadurch gekennzeichnet,**
**dass** je ein Teilkreissegment (5, 6) seitlich neben der Transporteinrichtung (2) angeordnet ist.

3. Vorrichtung nach Anspruch 1 und 2,
**dadurch gekennzeichnet,**
**dass** auf jedem Teilkreissegment (5, 6) wenigstens ein Bearbeitungswerkzeug (4) verfahrbar angeordnet ist.

4. Vorrichtung nach einem der Ansprüche 1 bis 3,
**dadurch gekennzeichnet,**
**dass** die Bearbeitungseinrichtung aus mehreren Teilkreissegmenten besteht, und dass die Teilkreissegmente (5, 6) in der Bearbeitungseinrichtung (3) diametral gegenüberliegend angeordnet sind.

5. Vorrichtung nach einem der Ansprüche 1 bis 4,
**dadurch gekennzeichnet,**
**dass** auf jedem Teilkreissegment (5, 6) zumindest zwei Bearbeitungswerkzeuge (4, 1) und (4.2) verfahrbar angeordnet sind.

6. Vorrichtung nach einem der Ansprüche 1 bis 6,
**dadurch gekennzeichnet,**
**dass** die Bearbeitungswerkzeuge (4) entlang einer Bewegungsbahn (7) auf dem Teilkreissegment (5, 6) mittels eines Antriebs (8) verfahrbar sind.

7. Vorrichtung nach einem der Ansprüche 1 bis 7,
**dadurch gekennzeichnet,**
**dass** an der Bewegungsbahn (7) die Bearbeitungswerkzeuge (4) auf Schlitten (11) befestigt sind, welche auf an dem Teilkreissegment (5, 6) angeordneten Schienen (9) und (10) gelagert sind.

8. Vorrichtung nach einem der Ansprüche 1 bis 8,
**dadurch gekennzeichnet,**
**dass** die Transporteinrichtung (2) im Bereich der angeordneten Bearbeitungseinrichtung (3) unterbrochen ausgebildet ist.

## Claims

1. Device (1) for processing elongated workpieces such as, for example, window profiles or door profiles, which are displaceable by means of a transporting device (2) in at least one horizontal plane, and wherein in a plane arranged essentially perpendicularly to the direction of movement of the workpieces a processing device (3) with tools (4) is provided which is spatially arranged in the perpendicular plane in relation to the workpiece, wherein the processing device (3) comprises one or more partial circular segments (5, 6) on which the tools (4) are arranged in a displaceable manner,
**characterised in that**
each partial circular segment (5, 6) is displaceable in the X, Y and Z direction with regard to the workpiece arranged on the transport device (2) and the processing device (3) comprises a holder device (12) for each partial circular segment (5, 6) which is displaceable in the X and Z direction on a guide (13) in a machine frame (14), wherein on a guide (13) a perpendicularly arranged profile carrier (15) is provided on which the fastened partial circular segment (5, 6) is borne in a displaceable manner in the Y direction.

2. Device according to claim 1 **characterised in** one partial circular segment (5, 6) each is arranged laterally next to the transporting device (2).

3. Device according to claim 1 and 2 **characterised in that** on each partial circular segment (5, 6) at least one processing tool (4) is displaceably arranged.

4. Device according to any one of claims 1 to 3 **characterised in that** the processing device comprises several partial circular segments and **in that** the partial circular segments (5, 6) are arranged diametrically opposite each other in the processing device (3).

5. Device according to any one of claims 1 to 4 **characterised in that** on each partial circular segment (5, 6) at least two processing tools (4, 1) and (4.2) are displaceably arranged.

6. Device according to any one of claims 1 to 6 **characterised in that** the processing tools (4) are displaceable by means of an actuator (8) along a movement path (7) on the partial circular segment (5, 6).

7. Device according to any one of claims 1 to 7 **characterised in that** on the movement path (7) the processing tools (4) are fastened on sleds (11) which are borne on rails (9) and (10) arranged on the partial circular segment (5, 6).

8. Device according to any one of claims 1 to 8 **characterised in that** the transporting device (2) is designed in an uninterrupted manner in the area of the arranged processing device (3).

## Revendications

1. Dispositif (1) pour usiner des pièces à usiner en forme de tige, telles par exemple des profilés de fenêtre ou des profilés de porte, lesquelles sont déplaçables au moyen d'un dispositif de transport (2) dans au moins un plan horizontal, et dans lequel, dans un plan disposé sensiblement perpendiculairement à la direction de déplacement des pièces à usiner, un dispositif d'usinage (3) avec des outils (4) est prévu, lequel est orienté dans le plan perpendiculaire dans l'espace par rapport à la pièce à usiner, dans lequel le dispositif d'usinage (3) se compose d'un ou plusieurs segments de cercle primitif (5, 6), disposés dans un plan sensiblement perpendiculaire, au niveau desquels les outils (4) sont disposés de manière déplaçable,
**caractérisé en ce que** chaque segment de cercle primitif (5, 6) est déplaçable dans la direction X, Y et Z par rapport à la pièce à usiner disposée sur le dispositif de transport (2) et que le dispositif d'usinage (3) se compose respectivement d'un dispositif de retenue (12) pour le segment de cercle primitif (5, 6), lequel est déplaçable dans la direction X et Z sur une coulisse (13) dans un châssis de machine (14), dans lequel un support profilé (15) disposé perpendiculairement est prévu sur la coulisse (13), sur lequel le segment de cercle primitif (5, 6) fixé est monté de manière déplaçable dans la direction Y.

2. Dispositif selon la revendication 1, **caractérisé en ce que** respectivement un segment de cercle primitif (5, 6) est disposé latéralement à côté du dispositif de transport (2).

3. Dispositif selon la revendication 1 et 2, **caractérisé en ce que**, sur chaque segment de cercle primitif (5, 6), au moins un outil d'usinage (4) est disposé de manière déplaçable.

4. Dispositif selon l'une des revendications 1 à 3, **caractérisé en ce que** le dispositif d'usinage se compose de plusieurs segments de cercle primitif et que les segments de cercle primitif (5, 6) sont disposés de manière située diamétralement en vis-à-vis dans le dispositif d'usinage (3).

5. Dispositif selon l'une des revendications 1 à 4, **caractérisé en ce que**, sur chaque segment de cercle primitif (5, 6), au moins deux outils d'usinage (4, 1) et (4.2) sont disposés de manière déplaçable.

6. Dispositif selon l'une des revendications 1 à 6, **caractérisé en ce que** les outils d'usinage (4) sont déplaçables le long d'une trajectoire (7) sur le segment de cercle primitif (5, 6) au moyen d'un entraînement (8).

7. Dispositif selon l'une des revendications 1 à 7, **caractérisé en ce que**, au niveau de la trajectoire (7), les outils d'usinage (4) sont fixés sur des chariots (11) qui sont montés sur des rails (9) et (10) disposés au niveau du segment de cercle primitif (5, 6).

8. Dispositif selon l'une des revendications 1 à 8, **caractérisé en ce que** le dispositif de transport (2) est réalisé de manière interrompue dans la zone du dispositif d'usinage (3) disposé.
